# EUROPÄISCHE PATENTSCHRIFT

(11) **EP 4 273 423 B1**
(45) Veröffentlichungstag und Bekanntmachung des Hinweises auf die Patenterteilung: **08.07.2026**
(21) Anmeldenummer: 23170801.7
(22) Anmeldetag: 28.04.2023
(51) Int. Cl.: F16K 1/42, F16K 47/08

(54) **VENTILSITZ FÜR EIN HUBVENTIL UND HUBVENTIL**
VALVE SEAT FOR A POPPET VALVE, AND POPPET VALVE
SIÈGE DE SOUPAPE POUR UNE SOUPAPE À LEVÉE ET SOUPAPE À LEVÉE

(30) Priorität: 29.04.2022 DE 202022102338 U
(43) Veröffentlichungstag der Anmeldung: 08.11.2023
(73) Patentinhaber: Samson Aktiengesellschaft, 60314 Frankfurt am Main (DE)
(72) Erfinder: WETZSTEIN, Nadine, 60594 Frankfurt am Main (DE); VNUCEC, Domagoj, 68594 Ilvesheim (DE)
(74) Vertreter: Schmid, Nils T.F.

(56) Entgegenhaltungen:
- WO-A1-97/18411
- JP-A- S5 962 779
- JP-A- S59 140 967

## Beschreibung

Die Erfindung betrifft ein Hubventil für eine prozesstechnische Anlage, wie eine chemische Anlage, insbesondere eine petrochemische Anlage, ein Kraftwerk, eine Brauerei oder dergleichen. Die Erfindung betrifft auch einen Ventilsitz für ein solches Hubventil.

Hubventile haben im Allgemeinen ein Ventilgehäuse, das einen Einlasskanal, einen Auslasskanal, einen Brückenabschnitt mit einer Durchgangsöffnung und einem Halsbereich umfasst, wobei der Ventilsitz in der Durchgangsöffnung des Brückenabschnitts montiert ist, üblicherweise eingeschraubt, und die Durchgangsöffnung auskleidet. Das Hubventilglied ist im Allgemeinen in einer Hubrichtung oder Axialrichtung translationsbeweglich relativ zu dem Ventilsitz beweglich, um eine Prozessfluidströmung durch das Hubventil einzustellen. Das Hubventilglied ist üblicherweise über eine Stellstange an einem Aktor zum Betätigen des Ventilgliedes verbunden. Die Stellstange ist in der Axialrichtung ausgerichtet und im Allgemeinen durch den Halsbereich aus dem Ventilgehäuse hinaus zu dem Aktor geführt.

Der Einlasskanal beschreibt üblicherweise einen gewölbten Bogen, der zu einem Gehäusevolumen unterhalb der Durchgangsöffnung führt. Der Auslasskanal beschreibt typischerweise einen entgegengesetzt zum Einlasskanal gewölbten Bogen, der bei der Durchgangsöffnung beginnt. Die Durchgangsöffnung hat üblicherweise eine Mittelachse, die zur Hubachse bzw. Stellrichtung der Stellstange korrespondiert. Der Einlasskanal und der Auslasskanal sind häufig an ihrer jeweiligen Einlassbeziehungsweise Auslassöffnung am jeweiligen von der Durchgangsöffnung entfernten Ende quer, beispielsweise senkrecht, zur Mittelachse ausgerichtet und können parallel oder sogar koaxial zu einander ausgerichtet sein. Die Baulänge üblicher Hubventile ist normiert, sodass für die Umlenkung der Prozessfluidströmung nur ein begrenzter, definierter Bauraum zur Verfügung steht. Die mehrfache Umlenkung der Prozessströmung zwischen Einlass und Auslass verursacht einen Strömungswiderstand infolge von Strömungsablösungen und nachfolgender Wirbelbildungen. Ein unerwünschter Druckabfall oder Strömungswiderstand kann beispielsweise infolge von Ablösungen und der Bildung von Strudeln oder Wirbeln in dem Gehäusevolumen unterhalb und/oder oberhalb der Sitzbrücke auftreten.

WO 97/18411 A1 beschreibt ein Hubventil mit einem Ventilgehäuse, das eine Öffnung und einen darin angeordneten Sitzring aufweist. Das Hubventil hat ein Ventilglied, das relativ zu der Öffnung beweglich ist. An dem Sitzring, dem Ventilglied oder der Wand des Einlasskanals soll stromaufwärts in Relation zur Durchgangsöffnung des Hubventils eine Struktur angeformt sein, um Wirbelbildung und andere Störungen der Prozessfluidströmung zu verhindern. Die Struktur kann beispielsweise als Korb, Rohr mit seitlichen Öffnungen gebildet sein oder als eine Leitschaufel, die die Durchgangsöffnung diagonal überbrückt. Weitere Hubventile sind aus JPS5962779A und aus JPS59140967A bekannt.

Es ist eine Aufgabe der Erfindung, einen Ventilsitz für ein Hubventil und ein Hubventil bereit zu stellen, das die Nachteile des Stands der Technik überwindet, insbesondere eine stetige Hubventil-Kennlinie aufweist und/oder Wirbelbildung im Bereich der Durchgangsöffnung entgegenwirkt. Diese Aufgabe lösen die Gegenstände der unabhängigen Ansprüche.

Demnach ist ein Ventilsitz für ein Hubventil einer prozesstechnischen Anlage vorgesehen. Die prozesstechnische Anlage kann beispielsweise eine chemische Anlage, insbesondere eine petrochemische Anlage, ein Kraftwerk, oder eine Lebensmittel verarbeitende Anlage wie eine Brauerei, oder dergleichen sein. Der Ventilsitz ist ausgelegt und eingerichtet zur Verwendung in einem Hubventil des Typs, das ein Ventilgehäuseumfasst, welches mit einem Einlasskanal, einem Auslasskanal, einem Brückenabschnitt, einer Durchgangsöffnung und einem Halsbereich ausgestattet ist. Der Ventilsitz ist derart am Brückenabschnitt montierbar, dass die Durchgangsöffnung mit einem zum Ventilsitz korrespondierenden Hubventilglied verschließbar ist. Ein Hubventil mit erfindungsgemäßem Ventilsitz wird nachfolgend im Detail beschrieben. Der Ventilsitz umfasst einen Hülsenkörper und eine Anschlagfläche zum verschließenden Kooperieren mit dem Hubventilglied. Der Hülsenkörper des Ventilsitzes ist hohlzylindrisch und definiert eine Axialrichtung. Zumindest im Bereich des Ventilsitzes ist der Hülsenkörper kreisringförmig, um kooperierend mit der Durchgangsöffnung im Brückenabschnitt des Ventilgehäuses eine Durchlassöffnung für das Prozessfluid zu definieren. Die Durchlassöffnung ist durch das Hubventilglied teilweise oder vorzugsweise vollständig verschließbar. In einem verschlossenen 2/21 Zustand des Hubventils, in welchem das Hubventilglied verschließend mit dem Ventilsitz kooperiert, ist ein Durchfluss des Prozessfluides durch das Hubventil vorzugsweise vollständig unterbunden. Vorzugsweise ist ein Dichtmittel zwischen dem Ventilsitz und dem Ventilgehäuse angeordnet, um eine Prozessfluid-Leckage durch die Durchgangsöffnung im Bereich der Kontaktflächen zwischen Ventilsitz und Ventilgehäuse zu verhindern. Vorzugsweise ist der Hülsenkörper des Ventilsitzes zumindest im Bereich der Anschlagfläche rotationssymmetrisch bezüglich einer Mittelachse oder Mittelpunktlinie, die vorzugsweise entsprechend der Axialrichtung orientiert ist.

Die Anschlagfläche zum schließenden Kooperieren mit einem relativ zum Ventilsitz linearbeweglichen Hubventilglied ist in einem ersten axialen Endbereich des Hülsenkörpers angeordnet. Insbesondere verjüngt sich die Anschlagfläche des Ventilsitzes, vorzugsweise in Schließrichtung des Hubventils und/oder in Richtung des zum ersten axialen Endbereich gegenüberliegenden zweiten Endbereich (hier: nach unten). Eine sich verjüngende Anschlagfläche des Ventilsitzes hat vorzugsweise eine in Richtung des ersten axialen Endbereichs größer werdende lichte Weite. Vorzugsweise ist der Ventilsitz derart am Brückenabschnitt montierbar, dass der erste axiale Endbereich und die daran vorgesehene Anschlagfläche in Richtung von dem Brückenabschnitt auf den Halsbereich und/oder das Hubventilglied gerichtet ist.

Gemäß einem ersten Aspekt der Erfindung umfasst der Ventilsitz mehrere in einem zweiten axialen Endbereich des Hülsenkörpers, der zum ersten axialen Endbereich gegenüberliegt, hervorstehende Zapfen mit je einem freien Ende. Die Zapfen stehen vorzugsweise in Richtung von dem ersten axialen Endbereichs fortweisend hervor. Zusätzlich oder alternativ sind die Zapfen vorzugsweise in der Axialrichtung ausgerichtet.

Im Sinne der vorliegenden Offenbarung kann der erste axialen Endbereich als "oberer" Endbereich und der zweite axiale Endbereich als "unterer" Endbereich bezeichnet werden, wobei diese Bezeichnung unter Bezugnahme auf die beiliegenden Abbildungen bevorzugter Ausführungen der Erfindung als illustrativ und nicht als einschränkend zu verstehen sind. Der Fachmann weiß, dass ein Hubventil mit darin vorgesehenem Ventilsitz in einer prozesstechnischen Anlage in verschiedenen Orientierungen betriebsgemäß einsetzbar sein kann.

Mithilfe des Ventilsitzes gemäß dem ersten Aspekt der Erfindung kann durch die Zapfen eine Geometrie für das Ventilgehäuse bereitgestellt werden, welche Strudelbildung unterhalb des Bereichs der Sitzbrücke, insbesondere bei einer Anströmung in einer Konfiguration gemäß eines FTO-Ventils, reduziert, und somit der KV-Wert des Hubventils unabhängig vom eingestellten Drosselquerschnitt, von einer gewünschten Durchflussrate und/oder einem gewünschten Druckgradienten maximiert werden.

Mithilfe des erfindungsgemäßen Ventilsitzes wird eine Wirbelbildung im Bereich der Durchgangsöffnung verringert oder sogar verhindert, sodass unerwünschte Druckschwankungen eliminiert werden können. Überraschenderweise hat sich gezeigt, dass ein mit Zapfen versehener Ventilsitz im Vergleich zu einem konventionellen Ventilsitz eine Anhebung des KV-Werts um bis zu 25 % bewirken kann. Gleichzeitig kann die Amplitude von Schwankungen des KV-Wertes im Betrieb erheblich reduziert werden. Selbst in einem Hochdruckbetrieb können Druckschwankungen mithilfe des erfindungsgemäßen Ventilsitzes eliminiert werden. Hochdruckbetrieb kann eine betriebsgemäße Verwendung bei einer Druckdifferenz zwischen Einlasskanal und Auslasskanal von wenigstens 40 bar, insbesondere wenigstens 50 bar oder wenigstens 60 bar, bezeichnen.

Bei einer bevorzugten Ausführung des Ventilsitzes gemäß dem ersten Aspekt der Erfindung umfassen die mehreren Zapfen vier Zapfen, acht Zapfen oder zwölf Zapfen. Vorzugsweise bestehende die mehreren Zapfen aus vier Zapfen, sechs Zapfen, acht Zapfen, zehn Zapfen oder zwölf Zapfen. Es kann besonders bevorzugt sein, dass der erfindungsgemäße Ventilsitz genau acht Zapfen aufweist. Vorzugsweise ist der Ventilsitz mit einer geraden Anzahl Zapfen ausgestattet. Überraschenderweise hat sich gezeigt, dass bei einer dergestalt gewählten Anzahl von Zapfen mit geringem Herstellungssaufwand eine gute Wirbelbrechung erreicht werden kann.

Bei einer anderen Ausführung gemäß dem ersten Aspekt der Erfindung, die mit der vorigen kombinierbar ist, sind die mehreren Zapfen entlang der Axialrichtung betrachtet umfänglich gleichmäßig verteilt, insbesondere paarweise diametral gegenüberliegend, angeordnet. Die mehreren Zapfen können parallel zueinander und/oder bezüglich der Axialrichtung ausgerichtet sein. Die Axialrichtung kann eine Symmetrieachse des erfindungsgemäßen Ventilsitzes, insbesondere entlang dessen Mittelachse, definieren, wobei die mehreren Zapfen vorzugsweise konzentrisch um diese Achse geschart sind. In der die Axialrichtung umgebenden Umfangsrichtung sind die Zapfen vorzugsweise gleichmäßig beabstandet angeordnet. Vorzugsweise sind die mehreren Zapfen entlang des Umfangs des hohlzylindrischen Hülsenkörpers spiegelsymmetrisch angeordnet. Auf diese Weise kann der Ventilsitz besonders einfach montierbar sein, da konstruktiv sichergestellt ist, dass die gewünschte Wirkung unabhängig von der konkreten Einbauorientierung erreicht werden kann.

Bei einer weiteren Ausführung gemäß dem ersten Aspekt der Erfindung, die mit den vorigen kombinierbar ist, umfasst der Hülsenkörper einen in der Axialrichtung unterhalb der Anschlagfläche angeordneten, radial außenseitigen Montageabschnitt zum Befestigen des Ventilsitzes an einem Ventilgehäuse. Der Montageabschnitt ist in der Axialrichtung relativ zu der Anschlagfläche in Richtung des zweiten axialen Endes versetzt. Der Montageabschnitt kann beispielsweise mit einem Außengewinde versehen sein, um den Ventilsitz in ein korrespondierendes Innengewinde des Ventilgehäuses ein zu schrauben. Alternativ kann die Befestigung vom Ventilsitz im Ventilgehäuse mittels eines Flansches mit mehrerer Schraubverbindungen am Umfang erfolgen. Diese Befestigungsart hat den Vorteil, dass eine genaue Winkellage des Ventilsitzes zum Gehäuse gewährleistet ist. Alternativ oder zusätzlich, kann es vorgesehen sein, dass der Ventilsitz am Montageabschnitt mit einer äußeren Oberfläche ausgestattet ist, die gemäß einer Passung in die Durchgangsöffnung einsetzbar ist, beispielsweise einer Spielpassung und/oder einer Gleitpassung. Es kann bevorzugt sein, dass der Hülsenkörper im Bereich des Montageabschnitts vollumfänglich als kreisringförmiger Vollkörper gebildet ist. Vorzugsweise bildet derselbe Vollkörper den Montageabschnitt und die Anschlagfläche sowie gegebenenfalls die mehreren Zapfen. Die Außenseite des Hülsenkörpers in dem radial außenseitigen Montageabschnitt ist insbesondere rotationssymmetrisch.

Gemäß einer Weiterbildung des Ventilsitzes mit dem Montageabschnitt ist vorgesehen, dass der Montageabschnitt in der Axialrichtung zwischen den mehreren Zapfen und der Anschlagfläche angeordnet ist. In Richtung des ersten axialen Endes ist die Anschlagfläche benachbart, insbesondere vorzugweise vollständig versetzt, zu dem Montageabschnitt an dem Hülsenkörper angeordnet. In Richtung des zweiten axialen Endes benachbart, insbesondere vorzugsweise vollständig versetzt, zu der Montageabschnitt sind die mehreren Zapfen angeordnet. Es kann bevorzugt sein, dass der Montageabschnitt bezüglich des Brückenabschnitts und/oder der Durchgangsöffnung des Ventilgehäuses formabgestimmt ist, insbesondere dass die Axialerstreckung des Montageabschnitts der axialen Dicke des Brückenabschnitts und/oder der axialen Tiefe der Durchgangsöffnung entspricht.

Alternativ oder zusätzlich kann gemäß einer Ausführung des Ventilsitzes gemäß dem ersten Aspekt der Erfindung mit dem Montageabschnitt vorgesehen sein, dass sich die mehreren Zapfen in der Axialrichtung wenigstens so lang wie der Montageabschnitt erstrecken. Insbesondere erstrecken sich die mehreren Zapfen in der Axialrichtung länger als der Montageabschnitt. Es kann bevorzugt sein, dass der Ventilsitz derart auf das Ventilgehäuse formabgestimmt ist, dass die mehreren Zapfen in betriebsgemäßem Einbauzustand in den Einlasskanal oder in den Auslasskanal hineinragen.

Es kann bevorzugt sei, dass die Zapfen 1/3 bis 2/3 in den Einlasskanal oder in den Auslasskanal hineinragen. Vorzugsweise ist der Ventilsitz derart auf das Ventilgehäuse formabgestimmt, dass in betriebsgemäßem Einbauzustand die Zapfenhöhe der Zapfen zu wenigstens ¼, wenigstens 1/3, und/oder nicht mehr als 3/4, insbesondere nicht mehr als 2/3, aus dem Brückenabschnitt hinaus in den Einlasskanal und/oder den Auslasskanal hinein ragt.

Bevorzugt weisen zumindest einige der mehreren Zapfen unterschiedliche Zapfenhöhen in der Axialrichtung auf. Alternativ oder zusätzlich ist das freie Ende zumindest einiger der mehreren Zapfen in der Axialrichtung unterschiedlich weit von der Anschlagfläche entfernt angeordnet. Vorzugsweise kann ein Ventilsitz mit verschiedenen Zapfenhöhen und/oder unterschiedlich weit von der Anschlagfläche entfernt angeordneten freien Enden formangepasst an die Gestalt des unteren Arbeitsraums, insbesondere des Einlasskanals, oder an die Gestalt des oberen Arbeitsraums, insbesondere des Auslasskanals, angepasst sein, wobei vorzugsweise in einem betriebsgemäßen Einbauzustand eine Distanz in der Axialrichtung zwischen den verschiedenen freien Enden und dem Ventilgehäuse im Wesentlichen gleich groß ist.

Gemäß einer bevorzugten Ausführung gemäß dem ersten Aspekt der Erfindung, die mit den vorigen kombinierbar ist, hat der Ventilsitz eine insbesondere kleinste lichte Weite, insbesondere einen Innendurchmesser, vorzugsweise im Bereich der Durchgangsöffnung. Vorzugsweise ist die maximale Durchlassöffnung für das Prozessfluid durch das Hubventil durch diese lichte Weite, insbesondere diesen vorzugsweise kleinsten Innendurchmesser des Ventilsitzes, definiert. Die lichte Weite, insbesondere der Innendurchmesser, des Ventilsitzes ist vorzugsweise an der Anschlagfläche, insbesondere dem schmalen Ende der sich verjüngenden Anschlagfläche, geformt. Die mehreren Zapfen weisen eine vorzugsweise einheitliche Zapfenhöhe in der Axialrichtung auf, die wenigstens so groß ist wie 20 % der lichten Weite. Vorzugsweise liegt die Zapfenhöhe im Bereich 20 % bis 200 % der lichten Weite, insbesondere im Bereich 30 % bis 150 % der lichten Weite, vorzugsweise im Bereich 50 % bis 100 % der lichten Weite. Es kann bevorzugt sein, dass der Ventilsitz derart auf das Ventilgehäuse des Hubventils abgestimmt ist, dass der Fuß der Zapfen im Bereich der den Einlasskanal oder den Auslasskanal und/oder ersten Arbeitsraum begrenzenden Oberfläche des Brückenabschnitts angeordnet ist, und sich die mehreren Zapfen dort beginnend gemäß der jeweiligen Zapfenhöhe in den entsprechenden Kanal hervorstehen. Ventilsitze mit solcherart bemessenen Zapfen zeigen besonders eine besonders gute Wirbelbrechung. Ferner ist eine unterschiedliche Länge an Zapfen ist möglich, welche an den Arbeitsraum angepasst ist. Diese Variante ist besonders günstig, wenn eine Flanschverschraubung gewählt wurde, um eine Beschränkung der Zapfenlänge aufgrund des Einschraubvorganges bei der Variante mit einem Umfangsgewinde zu vermeiden.

Bei einer Ausführung des Ventilsitzes gemäß dem ersten Aspekt der Erfindung weisen die mehreren Zapfen, bevorzugt entlang der Axialrichtung betrachtet, jeweils einen teilringförmigen Axialquerschnitt auf. Der teilringförmige Axialquerschnitt der verschiedenen mehreren Zapfen ist bevorzugt als Teil eines Kreisrings ausgebildet, der sich insbesondere um einen Mittelpunkt des Kreisrings über einen Winkelbereich von höchstens 120°, bevorzugt höchstens 90° und besonders bevorzugt höchstens 45° erstreckt. Der teilringförmige Axialquerschnitt der verschiedenen mehreren Zapfen ist vorzugweise gleichförmig, insbesondere kongruent. Es kann bevorzugt sein, dass der hohlzylindrischen Hülsenkörper, insbesondere die Anschlagfläche und/oder der Montageabschnitt, eine Ringfläche rings um die Mittelachse aufspannt, die einen insbesondere konstanten Ringflächen-Innendurchmesser und einen insbesondere konstanten Ringflächen-Außendurchmesser definiert. Vorzugsweise weist der teilringförmige Axialquerschnitt der mehreren Zapfen den gleichen Ringflächen-Innendurchmesser und/oder Ringflächen-Außendurchmesser auf. Eine derartige Ausgestaltung hat sich in Bezug auf die Herstellung und Montage als besonders günstig herausgestellt.

Gemäß einem zweiten Aspekt der Erfindung umfasst der Ventilsitz eines erfindungsgemäßen Hubventils eine in einem zweiten axialen Endbereich des Hülsenkörpers, der zu dem ersten axialen Endbereich gegenüberliegt, hervorstehende teilringförmige Lochwand, die von einer Vielzahl sich in einer Radialrichtung erstreckenden Durchgangskanälen durchsetzt ist. Vorzugsweise weist der Ventilsitz genau eine Lochwand auf. Die Lochwand steht vorzugsweise in Richtung von dem ersten axialen Endbereich fortweisend hervor. Die Durchgangskanäle sind vorzugsweise in Bezug auf die Mittelachse des Hülsenkörpers in Radialrichtung orientiert, vorzugsweise mit zu der Radialrichtung korrespondierenden Durchgangskanals-Mittelachsen. Diese Variante ist besonders günstig, wenn eine Flanschverschraubung gewählt wurde, um eine genaue Ausrichtung der teilringförmigen Lochwand zu gewährleisten. Die Durchgangskanals-Mittelachsen stehen vorzugsweise senkrecht auf der Mittelachse des Hülsenkörpers, die vorzugsweise entsprechend der Axialrichtung ausgerichtet ist. Die Durchgangskanäle erstrecken sich bevorzugt jeweils von einer der Mittelachse des Hülsenkörpers zugewandten Innenseite der Lochwand bis zu einer der Mittelachse des Hülsenkörpers abgewandten Außenseite der Lochwand, insbesondere vollständig durch die Lochwand hindurch. Die Lochwand weist vorzugsweise entlang der Mittelachse des Hülsenkörpers und/oder entlang der Axialrichtung betrachtet eine Querschnittsfläche auf, die im Wesentlichen einem Teil eines Kreisrings um die Mittelachse des Hülsenkörpers entspricht.

Mithilfe des Ventilsitzes gemäß dem zweiten Aspekt der Erfindung kann durch die Lochwand eine Geometrie für das Ventilgehäuse bereitgestellt werden, welche Strudelbildung unterhalb des Bereichs der Sitzbrücke, insbesondere bei einer Anströmung in einer Konfiguration gemäß eines FTO-Ventils, reduziert, und somit der KV-Wert des Hubventils unabhängig vom eingestellten Drosselquerschnitt, von einer gewünschten Durchflussrate und/oder einem gewünschten Druckgradienten maximiert werden. Mithilfe des Ventilsitzes wird eine Wirbelbildung im Bereich der Durchgangsöffnung verringert oder sogar verhindert, sodass unerwünschte Druckschwankungen eliminiert werden können. Selbst in einem Hochdruckbetrieb können Druckschwankungen mithilfe des erfindungsgemäßen Ventilsitzes eliminiert werden.

Bei einer weiteren Ausführung eines Ventilsitzes gemäß dem zweiten Aspekt der Erfindung, umfasst der Hülsenkörper einen in der Axialrichtung unterhalb der Anschlagfläche angeordneten, radial außenseitigen Montageabschnitt zum Befestigen des Ventilsitzes an einem Ventilgehäuse. Der Montageabschnitt ist in der Axialrichtung relativ zu der Anschlagfläche in Richtung des zweiten axialen Endes versetzt. Der Montageabschnitt kann beispielsweise mit einem Außengewinde versehen sein, um den Ventilsitz in ein korrespondierendes Innengewinde des Ventilgehäuses einzuschrauben. Alternativ oder zusätzlich kann es vorgesehen sein, dass der Ventilsitz am Montageabschnitt mit einer äußeren Oberfläche ausgestattet ist, die gemäß einer Passung in die Durchgangsöffnung einsetzbar ist, beispielsweise einer Spielpassung und/oder einer Gleitpassung, wobei insbesondere der Ventilsitz eine Flanschverschraubung zur Befestigung am Ventilgehäuse umfasst. Es kann bevorzugt sein, dass der Hülsenkörper im Bereich des Montageabschnitts vollumfänglich als kreisringförmiger Vollkörper gebildet ist. Vorzugsweise bildet derselbe Vollkörper den Montageabschnitt und die Anschlagfläche sowie gegebenenfalls die Lochwand. Die Außenseite des Hülsenkörpers in dem radial außenseitigen Montageabschnitt ist insbesondere rotationssymmetrisch.

Gemäß einer Weiterbildung des Ventilsitzes gemäß dem zweiten Aspekt der Erfindung mit dem Montageabschnitt ist vorgesehen, dass der Montageabschnitt in der Axialrichtung zwischen der Lochwand und der Anschlagfläche angeordnet ist. In Richtung des ersten axialen Endes ist die Anschlagfläche benachbart, insbesondere vorzugweise vollständig versetzt, zu dem Montageabschnitt an dem Hülsenkörper angeordnet. In Richtung des zweiten axialen Endes benachbart, insbesondere vorzugsweise vollständig versetzt, zu dem Montageabschnitt ist die Lochwand angeordnet. Es kann bevorzugt sein, dass der Montageabschnitt bezüglich des Brückenabschnitts und/oder der Durchgangsöffnung des Ventilgehäuses formabgestimmt ist, insbesondere dass die Axialerstreckung des Montageabschnitts der axialen Dicke des Brückenabschnitts und/oder der axialen Tiefe der Durchgangsöffnung entspricht.

Alternativ oder zusätzlich kann gemäß einer Ausführung des Ventilsitzes gemäß dem zweiten Aspekt der Erfindung mit dem Montageabschnitt vorgesehen sein, dass sich die Lochwand in der Axialrichtung wenigstens so lang wie der Montageabschnitt erstreckt. Insbesondere erstreckt sich die Lochwand in der Axialrichtung länger als der Montageabschnitt. Es kann bevorzugt sein, dass der Ventilsitz derart auf das Ventilgehäuse formabgestimmt ist, dass die Lochwand in betriebsgemäßem Einbauzustand in den Einlasskanal oder in den Auslasskanal hineinragt. Bei einem erfindungsgemäßem Hubventil mit einem solchen Ventilsitz ragt die Lochwand 1/3 bis 2/3 in den Einlasskanal oder in den Auslasskanal hinein.

Vorzugsweise ist der Ventilsitz derart auf das Ventilgehäuse formabgestimmt, dass in betriebsgemäßem Einbauzustand die Wandhöhe der Lochwand zu wenigstens ¼, wenigstens 1/3, und/oder nicht mehr als 3/4, insbesondere nicht mehr als 2/3, aus dem Brückenabschnitt hinaus in den Einlasskanal und/oder den Auslasskanal hinein ragt, wobei nur Ausführungsbeispiele bei denen die Lochwand 1/3 bis 2/3 in den Einlasskanal oder in den Auslasskanal hinein ragt, in den Schutzbereich der Ansprüche fallen.

Gemäß einer bevorzugten Ausführung, die mit den vorigen kombinierbar ist, hat der Ventilsitz gemäß dem zweiten Aspekt der Erfindung eine insbesondere kleinste lichte Weite, insbesondere einen Innendurchmesser, vorzugsweise im Bereich der Durchgangsöffnung. Vorzugsweise ist die maximale Durchlassöffnung für das Prozessfluid durch das Hubventil durch diese lichte Weite, insbesondere diesen vorzugsweise kleinsten Innendurchmesser des Ventilsitzes, definiert. Die lichte Weite, insbesondere der Innendurchmesser, des Ventilsitzes ist vorzugsweise an der Anschlagfläche, insbesondere dem schmalen Ende der sich verjüngenden Anschlagfläche, geformt. Die Lochwand weist eine vorzugsweise konstante Wandhöhe in der Axialrichtung auf, die wenigstens so groß ist wie 20 % der lichten Weite. Vorzugsweise liegt die Wandhöhe im Bereich 20 % bis 200 % der lichten Weite, insbesondere im Bereich 30 % bis 150 % der lichten Weite, vorzugsweise im Bereich 50 % bis 100 % der lichten Weite. Es kann bevorzugt sein, dass der Ventilsitz derart auf das Ventilgehäuse des Hubventils abgestimmt ist, dass der Fuß der Wand im Bereich der den erstem Arbeitsraum oder Einlasskanal oder den zweiten Arbeitsraum oder Auslasskanal begrenzenden Oberfläche des Brückenabschnitts angeordnet ist, und sich die Lochwand dort beginnend gemäß der Wandhöhe in den entsprechenden Kanal hervorsteht. Ventilsitze mit solcherart bemessener Lochwand zeigen besonders eine besonders gute Wirbelbrechung.

Bei einer Ausführung eines Ventilsitzes gemäß dem zweiten Aspekt der Erfindung weisen die insbesondere einheitlichen Lochkanäle einen, vorzugsweise einheitlichen und/oder konstanten, Lochkanaldurchmesser von wenigstens 1 mm und/oder nicht mehr als 50 mm oder nicht mehr als 10 mm auf. Insbesondere weisen die Lochkanäle einen Lochkanaldurchmesser von wenigstens 2 mm oder wenigstens 5 mm auf. Insbesondere weisen die Lochkanäle einen Lochkanaldurchmesser von nicht mehr als 20 mm oder nicht mehr als 10 mm auf.

Gemäß einer anderen Ausführung eines Ventilsitzes nach dem zweiten Aspekt der Erfindung, die mit den vorigen kombinierbar ist, dehnt sich die Lochwand über eine Umfangserstreckung, insbesondere entlang der Mittelachse des Hülsenkörpers und/oder entlang der Axialrichtung betrachtet, vorzugsweise um die Mittelachse des Hülsenkörpers, von wenigstens 90°, insbesondere wenigstens 135°, und/oder nicht mehr als 270°, insbesondere nicht mehr als 225°, um eine Mittelachse des Ventilsitzes aus. Vorzugsweise hat die Lochwand eine Umfangserstreckung nicht mehr als 180°, besonders bevorzugt von etwa 160°. Es kann zweckmäßig sein, wenn die Lochwand entlang des Umfangs des hohlzylindrischen Hülsenkörpers spiegelsymmetrisch bezüglich einer Spiegelfläche des Ventilgehäuses angeordnet ist. Zur vorzugsweise spiegelsymmetrischen Anordnung des Hülsenkörpers mit der Lochwand in dem Ventilgehäuse können der Hülsenkörper und das Ventilgehäuse aufeinander formabgestimmt sein, beispielsweise kann der Ventilsitz einen radialen Vorsprung und die Durchgangsöffnung eine zu diesem Vorsprung korrespondierenden Rücksprung aufweisen, um eine spiegelsymmetrische Montage des Hülsenkörpers in dem Ventilgehäuse zu unterstützen.

Die Erfindung betrifft auch ein Hubventil für eine prozesstechnische Anlage, wie eine chemische Anlage, insbesondere eine petrochemische Anlage, ein Kraftwerk, eine Brauerei oder dergleichen. Das Hubventil umfasst ein Ventilgehäuse, das einen Einlasskanal, einen Auslasskanal, einen Brückenabschnitt mit einer Durchgangsöffnung und einem Halsbereich umfasst. Das erfindungsgemäße Hubventil hat einen zumindest teilweise in der Durchgangsöffnung des Brückenabschnitts angeordneten Ventilsitz gemäß dem ersten oder dem zweiten Aspekt der Erfindung. Vorzugsweise erstreckt sich der Ventilsitz in der Axialrichtung aus dem Bereich des Einlasskanal durch die Durchgangsöffnung bis in den Bereich des Auslasskanals. Der hohlzylindrischen Hülsenkörper des Ventilsitzes erstreckt sich in der Axialrichtung vollständig durch die Durchgangsöffnung und dehnt sich darüber hinaus insbesondere beidseitig aus. Vorzugsweise steht das erste axiale Ende des Ventilsitzes mit der daran angeordneten Anschlagfläche in Richtung auf das Hubventilglied und/oder den Halsbereichs zu weisend aus der Durchgangsöffnung hervor. Alternativ oder zusätzlich stehen die mehreren Zapfen oder die Lochwand am zweiten axialen Ende des Ventilsitzes in Richtung von dem Hubventilglied und/oder dem Halsbereich fortweisend aus der Durchgangsöffnung hervor. Das erste axiale Ende des Ventilsitzes kann an einer Oberseite des Brückenabschnitts angeordnet sein, insbesondere flanschartig darauf aufliegen.

Gemäß einer bevorzugten Ausführung eines Hubventils umfasst dieses ein mit dem Ventilsitz kooperierendes Hubventilglied, das in der Axialrichtung relativ zu dem Ventilsitz beweglich ist und eine Schließfläche zum abdichtenden Kooperieren mit der Anschlagfläche des Ventilsitzes umfasst. Insbesondere ist die Schließfläche als Mantelfläche eines Kegelstumpfs ausgebildet. Insbesondere umfasst das Hubventil ein Hubventilglied, das relativ zu dem Ventilgehäuse, insbesondere der Durchgangsöffnung, translatorisch in einer Hubrichtung linearbeweglich ist. Vorzugsweise umfasst des Hubventilglied einen Schließkörper, der im Allgemeinen als Ventilkegel bezeichnet sein kann, und eine Stellstange, die mit dem Ventilkegel verbunden ist. Der Ventilkegel oder andere Schließkörper umfasst vorzugsweise eine Schließfläche zum abdichtenden Kooperieren mit der Anschlagfläche des Ventilsitzes. Die Anschlagfläche des Ventilsitzes und die Schließfläche des Ventilkegel sind vorzugsweise formkomplementär aufeinander abgestimmt. Die Schließfläche und die Anschlagfläche können vorzugsweise eine kegelstumpfförmige Gestalt haben oder anders gesagt als Mantelfläche eines Kegelstumpfs ausgebildet sein. Die Stellstange ist vorzugsweise in der, insbesondere zur Axialrichtung und/oder Mittelachse des Ventilsitzes und/oder der Durchgangsöffnung, korrespondierenden, Hubrichtung linearbeweglich gelagert und durch den Halsbereich des Ventilgehäuses aus einem Innenraum des Ventilgehäuses, in dem sich der Ventilkegel befindet, hinaus geführt ist. Das Hubventil kann einen an dem Ventilgehäuse befestigbaren Deckelabschnitt zum Verschließen einer Betätigungsöffnung im Halsbereich aufweisen, der vorzugsweise eine Durchführung für die Stellstange aufweist.

Das Hubventil ist dazu ausgelegt und eingerichtet, eine Prozessfluidströmung vom Einlasskanal durch die Durchgangsöffnung zum Auslasskanal zuzulassen oder zu unterbinden. Abhängig von der Relativstellung des Hubventilglieds zum Ventilsitz kann ein Durchlassquerschnitt oder Drosselquerschnitt eingestellt werden, um mithilfe des Hubventils eine gewünschte Durchflussrate, einen gewünschten Druckgradienten oder ähnliches für das Prozessfluid einzustellen. Das Hubventil kann insbesondere als sogenanntes Flow-to-Open-Ventil (FTO-Ventil) oder als sogenanntes Flow-to-Close-Ventil (FTC-Ventil) konfiguriert sein, wobei das erfindungsgemäße Hubventil vorzugsweise als FTO-Ventil ausgelegt und eingerichtet ist. Der Einfachheit halber wird im Folgenden im Allgemeinen auf eine FTO-Ventilkonfiguration Bezug genommen, sofern nicht ausdrücklich anders angegeben. Bei einem FTO-Ventil fließt im betriebsgemäßen Einbauzustand des Hubventils in der prozesstechnischen Anlage das Prozessfluid zunächst durch den Einlasskanal, und sodann bei zumindest teilweise geöffnetem Hubventil in der Öffnungsrichtung des Hubventilgliedes (hier: nach oben) durch die Durchgangsöffnung und zuletzt durch den Auslasskanal. Bei einem FTC-Ventil wäre die Fließrichtung des Prozessfluids im Bereich der Durchgangsöffnung betriebsgemäß entgegen der Öffnungsrichtung des Ventilgliedes bzw. entsprechend der Schließrichtung des Ventilgliedes eingestellt.

Bei einer bevorzugten Ausführung eines erfindungsgemäßen Hubventils, insbesondere eines FTO-Hubventils, definiert das Hubventil einen ersten Arbeitsraum für das Prozessfluid, der sich von der Durchgangsöffnung zum Auslasskanal erstreckt, und einen zweiten Arbeitsraum für das Prozessfluid, der sich von der Durchgangsöffnung zum Einlasskanal erstreckt, wobei die Anschlagfläche in dem ersten Arbeitsraum und die mehreren Zapfen oder die Lochwand vorzugsweise exklusiv in dem zweiten Arbeitsraum angeordnet sind. Die durch das Ventilglied verschließbare Durchlassöffnung unterteilt den Innenraum des Hubventils in den ersten Arbeitsraum und den zweiten Arbeitsraum. Das Hubventilglied ist vorzugsweise in dem ersten Arbeitsraum beweglich angeordnet. Vorzugsweise ragt die Zapfenhöhe der Zapfen oder die Wandhöhe der Lochwand zu wenigstens ¼, wenigstens 1/3, und/oder nicht mehr als 3/4, insbesondere nicht mehr als 2/3, aus dem Brückenabschnitt hinaus in den zweiten Arbeitsraum und/oder den Einlasskanal hinein.

Bevorzugte Ausführungen der Erfindung werden in den abhängigen Ansprüchen beschrieben. Weitere Eigenschaften, Vorteile und Merkmale der Erfindung werden durch die folgende Beschreibung von bevorzugten Ausführungen der Erfindung anhand der beiliegenden Zeichnungen deutlich, in denen zeigen:
- Fig. 1: eine Schnittdarstellung eines erfindungsgemäßen Hubventils mit einem erfindungsgemäßen Ventilsitz gemäß einer ersten Ausführung;
- Fig. 2: eine perspektivische Ansicht des erfindungsgemäßen Ventilsitzes gemäß Figur 1;
- Fig. 3: eine Schnittdarstellung eines erfindungsgemäßen Hubventils mit einem erfindungsgemäßen Ventilsitz gemäß einer zweiten Ausführung; und
- Fig. 4: eine perspektivische Ansicht des erfindungsgemäßen Ventilsitzes gemäß Figur 3.

Ein erfindungsgemäßes Hubventil ist im Allgemeinen mit dem Bezugszeichen 100 bezeichnet. Ein Ventilsitz gemäß dem ersten Aspekt der Erfindung wird im Allgemeinen mit dem Bezugszeichen 10 bezeichnet. Eine Ventilsitz nach dem zweiten Aspekt der Erfindung wird im Allgemeinen mit dem Bezugszeichen 20 bezeichnet. In der nachfolgenden Beschreibung bevorzugter Ausführungen anhand der Figuren werden zur Vereinfachung der Lesbarkeit dieselben oder ähnliche Komponenten mit denselben oder ähnlichen Bezugszeichen versehen.

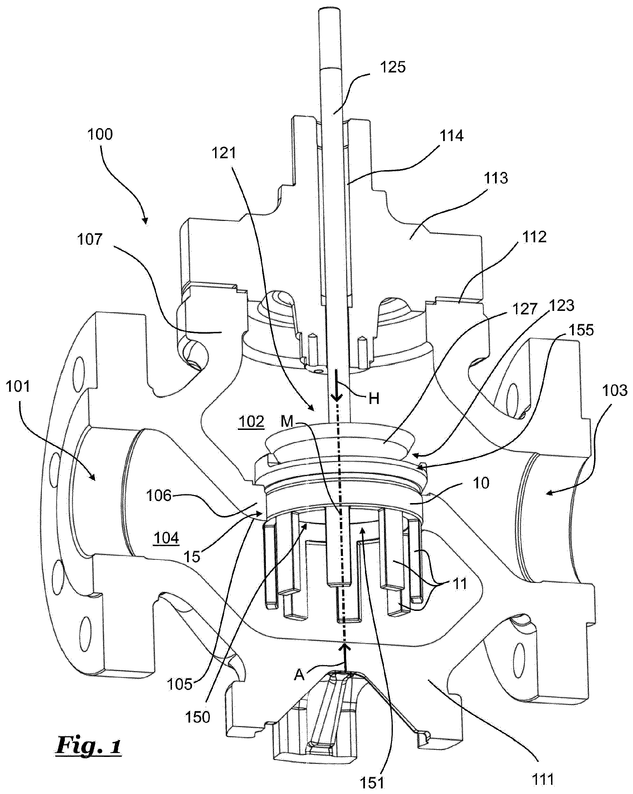

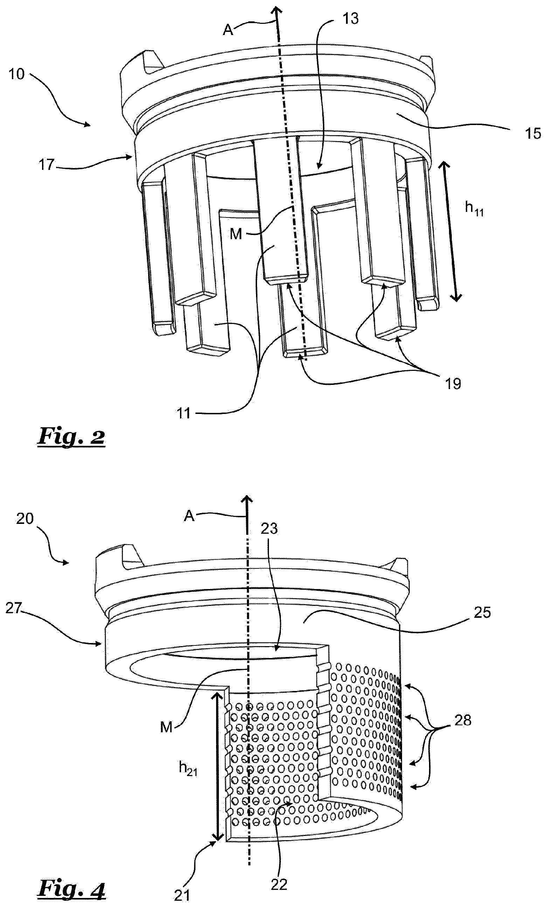

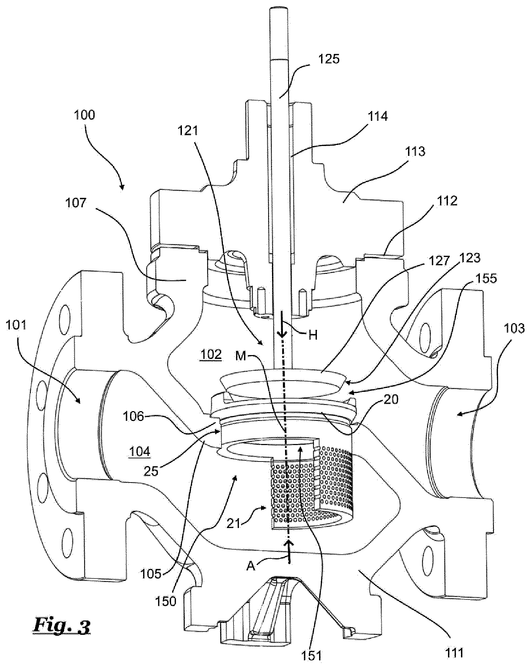

Figur 1 zeigt eine erste Ausführung eines erfindungsgemäßen Hubventils 100 mit einem Ventilsitz 10 gemäß dem ersten Aspekt der Erfindung, welcher nachfolgend unter Bezug auf Figur 2 im Detail erläutert wird. Sofern nicht anders angegeben, gelten die nachfolgenden Ausführungen in Bezug auf das Hubventil 100, welches in der Figur 1 abgebildet ist, ebenso für das Hubventil 100, das in der Figur 3 abgebildet ist. Die beiden Hubventil 100 der Figuren 1 und 3 unterscheiden sich im Wesentlichen nur durch den jeweils eingesetzten Ventilsitz 10 oder 20. Wie nachfolgend im Detail dargelegt, unterscheiden sich die Ventilsitze 10, 20 im Wesentlichen nur dadurch voneinander, dass der erste Ventilsitz 10 mehrere Zapfen 11 aufweist, wohingegen der zweite Ventilsitz 20 mit einer einzigen Lochwand 21 ausgestattet ist.

Das Hubventil 100 umfasst in der hier abgebildeten Ausführung ein Ventilgehäuse 111 und eine daran befestigte Abdeckung 113. Unmittelbar zwischen der Abdeckung 113 und dem Ventilgehäuse 111 kann ein Dichtring 112 oder dergleichen vorgesehen sein, um eine Leckage aus dem Innenraum des Hubventils 100 entlang der Kontaktfläche zwischen Abdeckung 123 und Ventilgehäuse 111 zu verhindern. Der Innenraum setzt sich, wie nachfolgend dargelegt, aus zwei Arbeitsräume 102,104 zusammen. Innerhalb des Ventilgehäuses 111 ist ein Hubventilglied 121 translationsbeweglich gehalten. In dem Ventilgehäuse 111 ist der Ventilsitz 10 ortsfest montiert.

Das Ventilgehäuse 111 umfasst einen Einlasskanal 101, einen Auslasskanal 103, einen Brückenabschnitt 105 mit einer Durchgangsöffnung 150 und einen Halsbereich 107. In der nachfolgenden Beschreibung wird das Hubventil 100 zur Vereinfachung des Verständnisses in einer betriebsgemäßen FTO-Konfiguration beschrieben, wobei dem Fachmann klar sei, dass alternativ eine FTC-Konfiguration realisiert sein kann. In der FTO-Konfiguration des Hubventils 100 kann in dessen abgebildeten geöffneten Zustand das Prozessfluid von dem Einlasskanal 101 durch den Brückenabschnitt 105 zum Auslasskanal 103 strömen. Zwischen dem Ventilsitz 10 und dem Hubventilglied 121 ist ein Durchlassquerschnitt 155 freigegeben, durch den das Prozessfluid strömen kann.

In dem Brückenabschnitt 105 des Ventilgehäuses 111 ist eine Durchgangsöffnung 150 vorgesehen, in der der Ventilsitz 10 eingesetzt ist. Im Kontaktbereich des Ventilgehäuses 111 und des Ventilsitzes 10 in oder an der Durchgangsöffnung 150 kann ein nicht näher dargestelltes Dichtmittel vorgesehen sein, um in dem geschlossenen Zustand des Hubventils 100 eine Prozessfluid-Leckageströmung entlang des Kontaktbereiches zu verhindern. In dem geöffneten Zustand des Hubventils 100 kann das Prozessfluid durch eine Durchlassöffnung 151 strömen, die durch den Innendurchmesser des Ventilsitzes 10 definiert ist.

Das Hubventilglied 121 und der Ventilsitz 10 können abdichtend schließend miteinander kooperieren. In einer nicht im Detail dargestellten Schließstellung des Hubventils 100 kooperiert das Hubventilglied 121 abdichtend mit dem Ventilsitz 10, wodurch der Durchlassquerschnitt 155 verschlossen ist, sodass eine Prozessfluidströmung durch das Hubventil 100 unterbunden ist.

Das Hubventilglied 121 umfasst eine Stellstange 125 und einen fest mit der Stellstange 125 verbundenen Ventilkegel 127, an dem Schließfläche 123 ausgebildet ist. Das Hubventilglied 121 ist in der Abdeckung 113 linearbeweglich gelagert, sodass sich das Hubventilglied 121 entlang einer Hubachse H translatorisch bewegen kann. Zur Festlegung der translatorischen Beweglichkeit des Hubventilglieds 121 kann die Abdeckung 113 ein Lineargleitlager oder dergleichen zur Führung der Stellstange 125 umfassen. Unmittelbar zwischen der Stellstange 125 und der Abdeckung 113 kann eine Dichtpackung 114 oder dergleichen vorgesehen sein, um eine Leckage aus dem Innenraum des Hubventils 100 entlang der Stellstange zu verhindern. In der nicht näher abgebildeten Schließstellung befindet sich das Hubventilglied 121 in Eingriff mit dem Ventilsitz 10. In der Schließstellung steht eine Schließfläche 123 des Hubventilglieds 121 in abdichtenden Berührkontakt mit einer korrespondierenden Anschlagfläche 13 des Ventilsitzes 10. Die Schließfläche 123 des Ventilkegels 127 ist als Mantelfläche eines Kegelstumpfs ausgebildet, oder kurz: kegelstumpfförmig. Vorzugsweise ist auch die dazu korrespondierende Anschlagfläche 13 des Ventilsitzes 10 als Mantelfläche eines Kegelstumpfs (kegelstumpfförmig) gebildet.

In dem geschlossenen Zustand des Hubventils 100 ist dessen Innenraum durch das Hubventilglied 121 und den Ventilsitz 10 unterteilt in einen zweiten Arbeitsraum 102, in den der Einlasskanal 101 mündet, und einen ersten Arbeitsraum 104, in den der Auslasskanal 103 mündet. Zum Freigegeben des Durchlassquerschnitts 155 kann der Ventilkegel 127 in dem ersten Arbeitsraum 104 fort von dem Ventilsitz 10 bewegt werden, beispielsweise bis zu der in Figur 1 gezeigten geöffneten Stellung des Hubventils 100, in der der Durchlassquerschnitt 155 zwischen der Anschlagfläche 13 und der Schließfläche 123 freigegeben ist. In der in Figur 1 abgebildeten Öffnungsstellung des Hubventils 100 befindet sich der Ventilkegel 127 in dem ersten Arbeitsraum 104.

Der in den Figuren 1 und 2 dargestellte Ventilsitz 10 hat zur Wirbelbrechung acht an seiner zur Anschlagfläche 13 gegenüberliegenden Seite hervorstehende Zapfen 11. Die Zapfen 11 ragen in den zweiten Arbeitsraum 102 des Hubventils 100 hinein, um einer Wirbelbildung im zweiten Arbeitsraum 102 entgegen zu stehen. Die Zapfen 11 haben gegenüberliegend zur Anschlagfläche 13 je ein freies Ende 19. Jeder Zapfen 11 steht einzeln von einem kreisringförmigen Teil des Hülsenkörpers 15 in der Axialrichtung A hervor. Die Zapfen 11 sind vorzugsweise, wie abgebildet, parallel zueinander und konzentrisch in Bezug auf eine Mittelachse M des Ventilsitzes 10 ausgerichtet. Die Mittelachse M kann definiert sein als die Rotationssymmetrieachse des kreisringförmigen Teils des Hülsenkörpers 15.

Mit Blick in Richtung der Axialrichtung A haben die Zapfen 11 eine jeweilige Zapfen-Querschnittsfläche, die teilringförmig ist. Die Zapfen-Querschnittsflächen der mehreren Zapfen 11 sind kongruent zueinander und gleich groß. Die Umfangsweite eines jeweiligen Zapfens 11 liegt im Bereich 10° bis 45°, insbesondere im Bereich 15° bis 30°, vorzugsweise bei etwa 20°. Unabhängig von der Anzahl der Zapfen 11 des Ventilsitzes 10 kann besonders bevorzugt sein, dass die kumulierte Umfangsweite aller Zapfen 11 des Ventilsitzes 10 nicht mehr als 270° beträgt, insbesondere nicht mehr als 210°, vorzugsweise nicht mehr als 180°. Alternativ oder zusätzlich beträgt die kumulierte Umfangsweite aller Zapfen 11 des Ventilsitzes 10 nicht weniger als 90°, insbesondere nicht weniger als 120°, vorzugsweise nicht weniger als 135°. Die Zapfen 11 sind in Umfangsrichtung rings um die Mittelachse M gleichmäßig verteilt an dem kreisringförmigen Teil des Hülsenkörpers 15 befestigt. Gemeinsam mit dem kreisringförmigen Teil des Hülsenkörpers 15 sind die Zapfen 11 einstückig als Vollkörper gebildet. Die Umfangsabstände zwischen den Zapfen 11 sind ebenfalls gleich groß. Die Zapfen 11 sind am Umfang des kreisringförmigen Teils des Hülsenkörpers 15 spiegelsymmetrisch angeordnet.

Unter Verweis auf Figur 2 wird nachfolgend der Ventilsitz 10 gemäß dem ersten Aspekt der Erfindung im Detail beschrieben. Der Ventilsitz 10 umfasst einen hohlzylindrischen Hülsenkörper 15. In einer Axialrichtung A betrachtet ist an einem ersten (in den Figuren 1 und 2: oberen) Ende des Hülsenkörpers 15 ist die Anschlagfläche 13 gebildet. Die Zapfen 11 sind am in Bezug auf diese Axialrichtung A zweiten (in den Figuren 1 und 2: unteren) Ende des Hülsenkörpers 15 angeordnet. In der Axialrichtung A zwischen einerseits dem Zapfen 11 und andererseits der Anschlagfläche 13 hat der Hülsenkörper 15 einen Montageabschnitt 17 zum Befestigen des Ventilsitzes 10 an dem Ventilgehäuse 111. Der Montageabschnitt 17 ist formangepasst an den Innenumfang der Durchgangsöffnung 150 im Brückenabschnitt 105 des Ventilgehäuses 111 gestaltet. Um die Einsetzposition des Ventilsitzes 10 in der Axialrichtung A festzulegen, kann vorgesehen sein, der Hülsenkörper 15 mit einem Anschlag, beispielsweise einem radialen Ringvorsprung 106, des Ventilgehäuses 11 in Eingriff bringbar ist.

In Bezug auf die Axialrichtung A sind die Anschlagfläche 13 und der Montagebereich 17 benachbart zueinander an dem kreisringförmigen Teil des Hülsenkörpers 15 gebildet. Der kreisringförmige Teil des Hülsenkörpers 15 ist vorzugsweise durch Vollmaterial gebildet. Der kreisringförmige Teil des Hülsenkörpers 15 kann einen vorzugsweise konstanten Innendurchmesser aufweisen, der die von Prozessfluid durchströmbare lichte Weite des Ventilsitzes 10 definiert. Die Zapfenhöhe h₁₁ der Zapfen 11 in der Axialrichtung A beträgt bei der abgebildeten Ausführung etwa 75 % des Innendurchmessers. Es hat sich als zweckmäßig erwiesen, wenn die Zapfenhöhe h₁₁ wenigstens 20 % des Innendurchmessers misst. Insbesondere ist die Zapfenhöhe größer als die axiale Höhe des kreisringförmigen Teils des Hülsenkörpers 15. Der Innendurchmesser an der schmalsten Stelle der Anschlagfläche 13 entspricht erfindungsgemäß dem Innendurchmesser der Zapfen 11.

Der Außendurchmesser des kreisringförmigen Teils des Hülsenkörpers 15 im Bereich des Montagebereichs 17 korrespondiert zu der Durchgangsöffnung 150 des Ventilgehäuses 111. Beispielsweise können der Montageabschnitt 17 und die Durchgangsöffnung 150 zumindest abschnittsweise gemäß einer Spiel- oder Presspassung aufeinander abgestimmt und/oder mit einer Gewindepaarung ausgestattet sein.

Der Ventilsitz 20 gemäß der in den Figuren 3 und 4 abgebildeten Ausführung der Erfindung hat zur Wirbelbrechung genau eine an seiner zur Anschlagfläche 23 gegenüberliegenden Seite hervorstehende Lochwand 21. Die Ventilsitze 10 und 20 unterscheiden sich im Wesentlichen nur dadurch, dass der zweite Ventilsitz 20 die Lochwand 21 und der erste Ventilsitz 10 die mehreren Zapfen 11 aufweist. Komponenten des Ventilsitzes 20 gemäß dem zweiten Aspekt ähnlich oder identisch zu denen des Ventilsitzes 10 gemäß dem zweiten Aspekt der Erfindung der Erfindung sind mit um zehn erhöhten Bezugszeichen versehen.

Figur 3 zeigt den Ventilsitz 20 in einer Einbaustellung in dem Ventilgehäuse 111, wobei die Lochwand 21 gegenüberliegend zu dem Einlasskanal 101 an der Durchgangsöffnung 150 angeordnet ist. Die Lochwand 21 ist an dem zum Einlasskanal 101 entfernten Umfangsweite der Durchgangsöffnung 150 und des darin befestigten Ventilsitzes 20 angeordnet. In Bezug auf die in Figur 3 dargestellte Schnittebene durch das Ventilgehäuse 111, die einen jeweiligen Mittelpunkt des Einlasskanal 101, des Auslasskanals 103 und des Halsbereichs 107 verläuft, ist die Lochwand 21 spiegelsymmetrisch.

In der Lochwand 21 sind eine Vielzahl an Durchgangskanälen 28 vorgesehen, die sich quer, vorzugsweise wie abgebildet senkrecht, zur einer Mittelachse M des Ventilsitzes 20 erstrecken. Diese Lochwand 21 ragt in den zweiten Arbeitsraum 102 des Hubventils 100 hinein, um zu verhindern, dass dort Wirbel auftreten, und um eventuell auftretende Wirbel zu brechen. In der Axialrichtung A erstreckt sich die Lochwand 21 beginnend bei dem kreisringförmigen Teil des Hülsenkörpers 25 über eine Wandhöhe h₂₁. Die Wandhöhe h₂₁ beträgt bei der abgebildeten Ausführung etwa 75 % des Innendurchmessers des Ventilsitzes 20. Es hat sich als zweckmäßig erwiesen, wenn die Wandhöhe h₂₁ wenigstens 20 % des Innendurchmessers misst.

Mit Blick in Richtung der Axialrichtung A hat die Lochwand 21 eine Querschnittsfläche, die teilringförmig ist. Die Lochwand 21 ist an dem kreisringförmigen Teil des Hülsenkörpers 15 an geformt. Entlang der Ringumfangserstreckung des Hülsenkörpers 15 erstreckt sich die Lochwand über einen Umfangsbereich von wenigstens 90°. Vorzugsweise erstreckt sich die Lochwand 21 der Umfangsrichtung über nicht mehr als 270°. Bevorzugt liegt die Umfangserstreckung der Lochwand 21 im Bereich 135° bis 180°, vorzugsweise bei etwa 160°. In Umfangsrichtung ist die Wandhöhe h₂₁ der Lochwand 21 konstant.

Die zahlreichen Durchgangskanälen 28 erstrecken sich quer, insbesondere senkrecht, in Bezug auf die Mittelachse M des Ventilsitzes 20 durch die Lochwand 21. Die Axialrichtung A ist vorzugsweise korrespondierend zu der Mittelachse M definiert. Die Durchgangskanäle 28 haben einen jeweiligen Lochkanaldurchmesser von wenigstens 1 mm und nicht mehr als 50 mm. Vorzugsweise sind die Lochkanaldurchmesser mehrerer, insbesondere aller, Durchgangskanäle 28 gleichgroß.

Die von der Lochwand 21 aufgespannte Teilzylinder-Mantelfläche, die im Folgenden als Lochwandfläche 22 bezeichnet wird, ist von den zahlreichen Durchgangskanälen 28 durchsetzt. Die Durchgangskanäle 28 können, wie abgebildet, alle die gleiche Gestalt und Größe haben. Alternativ ist denkbar, dass Durchgangskanäle 28 verschiedener Gestalt vorgesehen sind. Die Lochwandfläche 22 ist vorzugsweise von wenigstens zehn, insbesondere wenigen 50, vorzugsweise wenigstens 100, Durchgangskanälen 28 durchsetzt. Die Durchgangskanäle 28 sind, insbesondere in Umfangsrichtung und/oder in Richtung der Axialrichtung A, vorzugsweise gleichmäßig über die Lochwandfläche 22 verteilt angeordnet. Die kumulierte Querschnittsfläche der Durchgangskanäle 28 beträgt insbesondere wenigstens 10 %, insbesondere mindestens 25 %, besonders bevorzugt wenigstens 33 %, der Lochwandfläche 22. Zweckmäßigerweise beträgt die kumulierte Querschnittsfläche der Durchgangskanäle nicht mehr als 50 % der Lochwandfläche 22. Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein, wobei der Schutzbereich durch die Ansprüche definiert wird.

### Bezugszeichen:

- 10: Ventilsitz
- 11: Zapfen
- 13: Anschlagfläche
- 15: Hülsenkörper
- 17: Montageabschnitt
- 19: freies Ende
- 20: Ventilsitz
- 21: Lochwand
- 22: Lochwandfläche
- 23: Anschlagfläche
- 25: Hülsenkörper
- 27: Montageabschnitt
- 28: Durchgangskanal
- 100: Hubventil
- 101: Einlasskanal
- 102: zweiter Arbeitsraum
- 103: Auslasskanal
- 104: erster Arbeitsraum
- 105: Brückenabschnitt
- 107: Halsbereich
- 111: Ventilgehäuse
- 112: Dichtring
- 113: Abdeckung
- 114: Dichtpackung
- 116: Ringvorsprung Anzahl
- 121: Hubventilglied
- 123: Schließfläche
- 125: Stellstange
- 127: Ventilkegel
- 150: Durchgangsöffnung
- 151: Durchlassöffnung
- 155: Durchlassquerschnitt
- h₁₁: Zapfenhöhe
- h₂₁: Wandhöhe

- A: Axialrichtung
- H: Hubachse
- M: Mittelachse

## Patentansprüche

1. Ventilsitz (10) für ein Hubventil (100) einer prozesstechnischen Anlage, wie einer chemischen Anlage, insbesondere einer petrochemischen Anlage, einem Kraftwerk, einer Brauerei oder dergleichen, das ein Ventilgehäuse mit einem Einlasskanal (101), einem Auslasskanal (103), einem Brückenabschnitt (105) mit einer Durchgangsöffnung (150) und einem Halsbereich (107) umfasst, wobei der Ventilsitz (10) am Brückenabschnitt (105) montierbar ist, sodass die Durchgangsöffnung (150) mit einem zum Ventilsitz (10) korrespondierenden Hubventilglied (121) verschließbar ist, umfassend:
einen hohlzylindrischen Hülsenkörper (15), der eine Axialrichtung (A) definiert,
eine in einem ersten axialen Endbereich des Hülsenkörpers (15) angeordnete,
insbesondere sich verjüngende, Anschlagfläche (13) zum schließenden Kooperieren mit einem relativ zum Ventilsitz (10) linear beweglichen Hubventilglied (121),
**gekennzeichnet durch**
mehrere in einem zweiten axialen Endbereich des Hülsenkörpers (15), der zum ersten axialen Endbereich gegenüberliegt, hervorstehende Zapfen (11) mit je einem freien Ende, wobei ein Innendurchmesser des Hülsenkörpers (15) an der schmalsten Stelle der Anschlagfläche (13) einem Innendurchmesser der Zapfen (11) entspricht.

2. Ventilsitz (10) nach Anspruch 1, **dadurch gekennzeichnet, dass** die mehreren Zapfen (11) 4, 6, 8, 10 oder 12 Zapfen (11) umfassen oder daraus bestehen.

3. Ventilsitz (10) nach Anspruch 1 oder 2, **dadurch gekennzeichnet, dass** mehreren Zapfen (11) entlang der Axialrichtung (A) betrachtet umfänglich gleichmäßig verteilt, insbesondere paarweise diametral gegenüberliegend, angeordnet sind.
¹s. Beschreibung: Seite 17, letzter Absatz

4. Ventilsitz (10) nach einem der vorstehenden Ansprüche, dadurch**gekenn- zeichnet,** dass der Hülsenkörper (15) einen in Axialrichtung (A) unterhalb der Anschlagfläche (13) angeordneten, radial außenseitigen Montageabschnitt (17) zum Befestigen des Ventilsitzes (10) an einem Ventilgehäuse (111) umfasst.

5. Ventilsitz (10) nach Anspruch 4, **dadurch gekennzeichnet, dass** der Montageabschnitt (17) in der Axialrichtung (A) zwischen den mehreren Zapfen (11) und der Anschlagfläche (13) angeordnet ist.

6. Ventilsitz (10) nach Anspruch 4 oder 5, **dadurch gekennzeichnet , dass** die mehreren Zapfen (11) in der Axialrichtung (A) wenigstens so lang sind wie, insbesondere länger sind als, der Montageabschnitt (17).

7. Ventilsitz (10) nach einem der vorstehenden Ansprüche, dadurch **gekenn- zeichnet,** dass der Ventilsitz (10) eine insbesondere kleinste lichte Weite, insbesondere einen Innendurchmesser, vorzugsweise im Bereich der Durchgangsöffnung (150), aufweist und die mehreren Zapfen (11) eine Zapfenhöhe (h₁₁) in der Axialrichtung (A) aufweisen, die wenigstens so groß ist wie 20% der lichten Weite.

8. Ventilsitz (10) nach einem der vorstehenden Ansprüche, **dadurch gekennzeichnet, dass** die mehreren Zapfen (11) 1/3 bis 2/3 in den Einlasskanal (101) oder in den Auslasskanal (103) hineinragen.

9. Ventilsitz (10) nach einem der vorstehenden Ansprüche, **dadurch gekennzeichnet, dass** zumindest einige der mehreren Zapfen (11) unterschiedliche Zapfenhöhe (h₁₁) in der Axialrichtung (A) aufweisen und/oder dass das freie Ende zumindest einiger der mehreren Zapfen (11) in der Axialrichtung (A) unterschiedlich weit von der Anschlagfläche entfernt angeordnet ist.

10. Ventilsitz (10) nach einem der vorstehenden Ansprüche, **dadurch gekennzeichnet, dass** die mehreren Zapfen (11) jeweils einen teilringförmigen Axialquerschnitt aufweisen.

11. Hubventil (100) für eine prozesstechnische Anlage, wie eine chemische Anlage insbesondere eine petrochemische ein Kraftwerk, eine Brauerei oder dergleichen, das ein Ventilgehäuse (111) mit einem Einlasskanal (101), einem Auslasskanal (103), einem Brückenabschnitt (105) mit einer Durchgangsöffnung (150), einem Halsbereich (107) und einem Ventilsitz (20) umfasst, wobei der Ventilsitz zumindest teilweise in der Durchgangsöffnung (150) angeordnet ist, sodass die Durchgangsöffnung (150) mit einem zum Ventilsitz (20) korrespondierenden Hubventilglied (121) verschließbar ist, der Ventilsitz (20) umfassend: einen hohlzylindrischen Hülsenkörper (25), der eine Axialrichtung (A) definiert, eine in einem ersten axialen Endbereich des Hülsenkörpers (15) angeordnete, insbesondere sich verjüngende, Anschlagfläche (23) zum schließenden Kooperieren mit einem relativ zum Ventilsitz (20) linear beweglichen Hubventilglied (121), **gekennzeichnet durch** eine in einem zweiten axialen Endbereich des Hülsenkörpers (25), der zum ersten axialen Endbereich gegenüberliegt, hervorstehende teilringförmige Lochwand (21), die von einer Vielzahl sich in einer Radialrichtung erstreckenden Durchgangskanälen (28) durchsetzt ist, wobei die Lochwand (21) 1/3 bis 2/3 in den Einlasskanal (101) oder in den Auslasskanal (103) hineinragt.

12. Hubventil (100) nach Anspruch 11, **dadurch gekennzeichnet, dass** der Ventilsitz (20) genau eine Lochwand (21) aufweist.

13. Hubventil (100) nach Anspruch 11 oder 12, **dadurch gekennzeichnet, dass** der Hülsenkörper (25) einen in Axialrichtung (A) unterhalb der Anschlagfläche (23) angeordneten, radial außenseitigen Montageabschnitt (27) zum Befestigen des Ventilsitzes (20) an einem Ventilgehäuse (111) umfasst, wobei der Montageabschnitt (27) in der Axialrichtung (A) zwischen der Lochwand (21) und der Anschlagfläche (23) angeordnet ist.

14. Hubventil (100) nach einem der Ansprüche 11 bis 13, dadurch **gekenn- zeichnet,** dass der Ventilsitz (20) eine insbesondere kleinste lichte Weite, insbesondere einen Innendurchmesser, vorzugsweise im Bereich der Durchgangsöffnung (150), aufweist und die Lochwand (21) eine Wandhöhe in der Axialrichtung (A) aufweist, die wenigstens so groß ist wie 20% der lichten Weite.
² s. Anspruch 15

15. Hubventil (100) nach Anspruch einem der Ansprüche 11 bis 14, dadurch **gekenn- zeichnet,** dass die Durchgangskanäle (28) einen Lochkanaldurchmesser von wenigstens 1 mm, insbesondere wenigstens 2 mm oder wenigstens 5 mm, und/oder nicht mehr als 50 mm, insbesondere nicht mehr als 20 mm oder nicht mehr als 10 mm, aufweisen.

16. Hubventil (100) nach Anspruch einem der Ansprüche 11 bis 15, **dadurch gekennzeichnet, dass** sich die Lochwand (21) über eine Umfangserstreckung von wenigstens 90°, insbesondere wenigstens 135 °, und/oder nicht mehr als 270°, insbesondere nicht mehr als 225°, um eine Mittelachse (M) des Hülsenkörpers ausdehnt.

17. Hubventil (100) für eine prozesstechnischen Anlage, wie eine chemischen Anlage, insbesondere einer petrochemischen Anlage, einem Kraftwerk, einer Brauerei oder dergleichen, mit einem Ventilgehäuse (111), das einen Einlasskanal (101), einen Auslasskanal (103), einen Brückenabschnitt (105) mit einer Durchgangsöffnung (150) und einen Halsbereich (107) umfasst,
**gekennzeichnet durch**
einen zumindest teilweise in der Durchgangsöffnung (150) des Brückenabschnitts (105) angeordneten Ventilsitz (10, 20) nach einem der Ansprüche 1 bis 10.

18. Hubventil (100) nach einem der Ansprüche 1-17, **gekennzeichnet durch** ein mit dem
Ventilsitz (10, 20) kooperierendes Hubventilglied (121), das in Axialrichtung (A) relativ zu dem Ventilsitz (10, 20) beweglich ist und eine, insbesondere als Mantelfläche eines Kegelstumpfs ausgebildete, Schließfläche (113) zum abdichtenden Kooperieren mit der Anschlagfläche (13, 23) des Ventilsitzes (10, 20) umfasst.

19. Hubventil (100) nach einem der Ansprüche 1-18, **dadurch gekennzeichnet, dass**
das Hubventil (100) einen ersten Arbeitsraum (104) für das Prozessfluid definiert, der sich von der Durchgangsöffnung (150) zum Auslasskanal (103) erstreckt, und einen zweiten Arbeitsraum (102) für das Prozessfluid definiert, der sich von der Durchgangsöffnung (150) zum Einlasskanal (101) erstreckt, wobei die Anschlagfläche (13, 23) in dem ersten Arbeitsraum (104) und die mehreren Zapfen (11) oder die Lochwand (21) in dem zweiten Arbeitsraum (102) angeordnet sind.

20. Hubventil nach Anspruch 19, **dadurch gekennzeichnet, dass** die Zapfenhöhe (h₁₁) der Zapfen (11) oder die Wandhöhe der Lochwand (21) zu wenigstens 1/3, insbesondere wenigstens 2/3, aus dem Brückenabschnitt hinaus in den zweiten Arbeitsraum (102) und/oder den Einlasskanal (101) hinein ragt.

## Claims

1. Valve seat (10) for a globe valve (100) of a process engineering plant, such as a chemical plant, in particular a petrochemical plant, a power plant, a brewery or the like, which comprises a valve housing with an inlet channel (101), an outlet channel (103), a bridge section (105) with a through-opening (150) and a neck region (107), wherein the valve seat (10) can be mounted on the bridge section (105), so that the through-opening (150) can be closed with a globe valve member (121) corresponding to the valve seat (10), comprising:
a hollow cylindrical sleeve body (15), which defines an axial direction (A),
an in particular tapering stop surface (13) arranged in a first axial end region of the sleeve body (15) for closing cooperation with a globe valve member (121) linearly movable relative to the valve seat (10),
**characterized by**
a plurality of pins (11) protruding in a second axial end region of the sleeve body (15), which is opposite the first axial end region, each with a free end, wherein an inner diameter of the sleeve body (15) at the narrowest point of the stop surface (13) corresponds to an inner diameter of the pins (11).

2. Valve seat (10) according to Claim 1, **characterized in that** the plurality of pins (11) comprises or consists of 4, 6, 8, 10 or 12 pins (11).

3. Valve seat (10) according to Claim 1 or 2, **characterized in that** a plurality of pins (11), as viewed along the axial direction (A), are arranged in a circumferentially uniformly distributed manner, in particular diametrically opposite one another in pairs.

4. Valve seat (10) according to one of the preceding claims, **characterized in that** the sleeve body (15) comprises a radial outer mounting section (17), arranged below the stop surface (13) in the axial direction (A), for fastening the valve seat (10) to a valve housing (111).

5. Valve seat (10) according to Claim 4, **characterized in that** the mounting section (17) is arranged in the axial direction (A) between the plurality of pins (11) and the stop surface (13).

6. Valve seat (10) according to Claim 4 or 5, **characterized in that** the plurality of pins (11) in the axial direction (A) are at least as long as, in particular are longer than, the mounting section (17).

7. Valve seat (10) according to one of the preceding claims, **characterized in that** the valve seat (10) has an in particular smallest clear width, in particular an inner diameter, preferably in the region of the through-opening (150), and the plurality of pins (11) have a pin height (h₁₁) in the axial direction (A) which is at least as large as 20% of the clear width.

8. Valve seat (10) according to one of the preceding claims, **characterized in that** the plurality of pins (11) project 1/3 to 2/3 into the inlet channel (101) or into the outlet channel (103).

9. Valve seat (10) according to one of the preceding claims, **characterized in that** at least some of the plurality of pins (11) have different pin heights (h₁₁) in the axial direction (A) and/or **in that** the free end of at least some of the plurality of pins (11) is arranged at different distances from the stop surface in the axial direction (A).

10. Valve seat (10) according to one of the preceding claims, **characterized in that** the plurality of pins (11) each have a partially annular axial cross section.

11. Globe valve (100) for a process engineering plant, such as a chemical plant, in particular a petrochemical plant, a power plant, a brewery or the like, which comprises a valve housing (111) with an inlet channel (101), an outlet channel (103), a bridge section (105) with a through-opening (150), a neck region (107) and a valve seat (20), wherein the valve seat is arranged at least partially in the through-opening (150), so that the through-opening (150) can be closed with a globe valve member (121) corresponding to the valve seat (20), the valve seat (20) comprising:
a hollow cylindrical sleeve body (25), which defines an axial direction (A),
an in particular tapering stop surface (23) arranged in a first axial end region of the sleeve body (15) for closing cooperation with a globe valve member (121) linearly movable relative to the valve seat (20),
**characterized by**
a partially annular perforated wall (21) protruding in a second axial end region of the sleeve body (25), which is opposite the first axial end region, which is penetrated by a plurality of through-channels (28) extending in a radial direction, wherein the perforated wall (21) projects 1/3 to 2/3 into the inlet channel (101) or into the outlet channel (103).

12. Globe valve (100) according to Claim 11, **characterized in that** the valve seat (20) has exactly one perforated wall (21).

13. Globe valve (100) according to Claim 11 or 12, **characterized in that** the sleeve body (25) comprises a radial outer mounting section (27), arranged below the stop surface (23) in the axial direction (A), for fastening the valve seat (20) to a valve housing (111), wherein the mounting section (27) is arranged in the axial direction (A) between the perforated wall (21) and the stop surface (23).

14. Globe valve (100) according to one of Claims 11 to 13, **characterized in that** the valve seat (20) has an in particular smallest clear width, in particular an inner diameter, preferably in the region of the through-opening (150), and the perforated wall (21) has a wall height in the axial direction (A) which is at least as large as 20% of the clear width.

15. Globe valve (100) according to one of Claims 11 to 14, **characterized in that** the through-channels (28) have a perforated-channel diameter of at least 1 mm, in particular at least 2 mm or at least 5 mm, and/or not more than 50 mm, in particular not more than 20 mm or not more than 10 mm.

16. Globe valve (100) according to one of Claims 11 to 15, **characterized in that** the perforated wall (21) extends over a circumferential extent of at least 90°, in particular at least 135°, and/or not more than 270°, in particular not more than 225°, about a central axis (M) of the sleeve body.

17. Globe valve (100) for a process engineering plant, such as a chemical plant, in particular a petrochemical plant, a power plant, a brewery or the like, with a valve housing (111) which comprises an inlet channel (101), an outlet channel (103), a bridge section (105) with a through-opening (150) and a neck region (107),
**characterized by**
a valve seat (10, 20) according to one of Claims 1 to 10 arranged at least partially in the through-opening (150) of the bridge section (105).

18. Globe valve (100) according to one of Claims 1-17, **characterized by** a globe valve member (121) cooperating with the valve seat (10, 20), which is movable relative to the valve seat (10, 20) in the axial direction (A) and comprises a closing surface (113), in particular formed as a lateral surface of a truncated cone, for sealing cooperation with the stop surface (13, 23) of the valve seat (10, 20).

19. Globe valve (100) according to one of Claims 1-18, **characterized in that** the globe valve (100) defines a first working space (104) for the process fluid, which extends from the through-opening (150) to the outlet channel (103), and defines a second working space (102) for the process fluid, which extends from the through-opening (150) to the inlet channel (101), wherein the stop surface (13, 23) is arranged in the first working space (104) and the plurality of pins (11) or the perforated wall (21) is arranged in the second working space (102).

20. Globe valve according to Claim 19, **characterized in that** the pin height (h₁₁) of the pins (11) or the wall height of the perforated wall (21) projects by at least 1/3, in particular at least 2/3, out of the bridge section into the second working space (102) and/or the inlet channel (101).

## Revendications

1. Siège de soupape (10), pour une soupape de levée (100) d'une installation de procédé, telle qu'une installation chimique, notamment une installation pétrochimique, une centrale électrique, une brasserie ou similaires, qui comprend un corps de soupape doté d'un canal d'admission (101), d'un canal d'évacuation (103), d'une section de raccord (105) dotée d'un orifice de passage (150) et d'une zone de collet (107), le siège de soupape (10) pouvant se monter sur la section de raccord (105) de telle sorte que l'orifice de passage (150) puisse se fermer à l'aide d'un organe (121) de soupape de levée correspondant au siège de soupape (10), comprenant :
un corps de douille (15) cylindrique creux, qui définit une direction axiale (A),
une surface de butée (13) se rétrécissant notamment, placée dans une première zone d'extrémité axiale du corps de douille (15), destinée à coopérer en fermeture avec un organe (121) de soupape de levée linéairement déplaçable par rapport au siège de soupape (10),
**caractérisé par**
plusieurs tourillons (11) faisant saillie dans une deuxième zone d'extrémité axiale du corps de douille (15), qui est placée à l'opposée de la première zone d'extrémité axiale, dotés chacun d'une extrémité libre, à l'endroit le plus étroit de la surface de butée (13), un diamètre intérieur du corps de douille (15) correspondant à un diamètre intérieur des tourillons (11).

2. Siège de soupape (10) selon la revendication 1, caractérisé en ce les plusieurs tourillons (11) comprennent 4, 6, 8, 10 ou 12 tourillons (11) ou sont constitués de ceux-ci.

3. Siège de soupape (10) selon la revendication 1 ou 2, **caractérisé en ce que**, considérés le long de la direction axiale (A), plusieurs tourillons (11) sont placés en distribution périphérique régulière, notamment en étant diamétralement opposés par paires.

4. Siège de soupape (10) selon l'une quelconque des revendications précédentes, **caractérisé en ce que** le corps de douille (15) comprend une section de montage (17), placée sous la surface de butée (13) dans la direction axiale (A), extérieure en direction radiale, pour la fixation du siège de soupape (10) sur un corps de soupape (111).

5. Siège de soupape (10) selon la revendication 4, **caractérisé en ce que** la section de montage (17) est placée dans la direction axiale (A) entre les plusieurs tourillons (11) et la surface de butée (13).

6. Siège de soupape (10) selon la revendication 4 ou 5, **caractérisé en ce que** dans la direction axiale (A), les plusieurs tourillons (11) sont au moins aussi longs, notamment plus longs que la section de montage (17).

7. Siège de soupape (10) selon l'une quelconque des revendications précédentes, **caractérisé en ce que** le siège de soupape (10) présente une notamment plus petite largeur libre, notamment un diamètre intérieur, de préférence dans la zone de l'orifice de passage (150) et les plusieurs tourillons (11) présentent une hauteur de tourillon (h₁₁) dans la direction axiale (A) qui est au moins aussi grande que 20 % de la largeur libre.

8. Siège de soupape (10) selon l'une quelconque des revendications précédentes, **caractérisé en ce que** les tourillons (11) saillissent de 1/3 à 2/3 à l'intérieur du canal d'admission (101) ou du canal d'évacuation (103).

9. Siège de soupape (10) selon l'une quelconque des revendications précédentes, **caractérisé en ce qu'**au moins certains des plusieurs tourillons (11) présentent des hauteurs de tourillons (h₁₁) différentes dans la direction axiale (A) et / ou **en ce que** l'extrémité libre de certains des plusieurs tourillons (11) est placée avec un éloignement différent de la surface de butée dans la direction axiale (A).

10. Siège de soupape (10) selon l'une quelconque des revendications précédentes, **caractérisé en ce que** les plusieurs tourillons (11) présentent chacun une section transversale axiale en forme d'anneau partiel.

11. Soupape de levée (100), destinée à une installation de procédé, telle qu'une installation chimique, notamment une installation pétrochimique, une centrale électrique, une brasserie ou similaires, qui comprend un corps de soupape (111) doté d'un canal d'admission (101), d'un canal d'évacuation (103), d'une section de raccord (105) dotée d'un orifice de passage (150), d'une zone de collet (107) et d'un siège de soupape (20), le siège de soupape étant placé au moins partiellement dans l'orifice de passage (150), de telle sorte que l'orifice de passage (150) puisse se fermer à l'aide d'un organe (121) de soupape de levée correspondant au siège de soupape (20), comprenant :
un corps de douille (25) cylindrique creux, qui définit une direction axiale (A),
une surface de butée (23) se rétrécissant notamment, placée dans une première zone d'extrémité axiale du corps de douille (25), destinée à coopérer en fermeture avec un organe (121) de soupape de levée linéairement déplaçable par rapport au siège de soupape (20),
**caractérisée par**
une paroi perforée (21) en forme d'anneau partiel, faisant saillie dans une deuxième zone d'extrémité axiale du corps de douille (25), qui est placée à l'opposée de la première zone d'extrémité axiale, qui est traversée par une pluralité de canaux de passage (28) s'étendant dans une direction radiale, la paroi perforée (21) saillant de 1/3 à 2/3 dans le canal d'admission (101) ou dans le canal d'évacuation (103).

12. Soupape de levée (100) selon la revendication 11, **caractérisée en ce que** le siège de soupape (20) présente précisément une paroi perforée (21).

13. Soupape de levée (100) selon la revendication 11 ou 12, **caractérisée en ce que** le corps de douille (25) comprend une section de montage (27), placée sous la surface de butée (23) dans la direction axiale (A), extérieure en direction radiale, pour la fixation du siège de soupape (20) sur un corps de soupape (111), la section de montage (27) étant placée dans la direction axiale (A) entre la paroi perforée (21) et la surface de butée (23).

14. Soupape de levée (100) selon l'une quelconque des revendications 11 à 13, **caractérisée en ce que** le siège de soupape (20) présente une notamment plus petite largeur libre, notamment un diamètre intérieur, de préférence dans la zone de l'orifice de passage (150) et **en ce que** la paroi perforée (21) présente dans la direction axiale (A) une hauteur de paroi qui est au moins aussi grande que 20 % de la largeur libre.

15. Soupape de levée (100) selon l'une quelconque des revendications 11 à 14, **caractérisée en ce que** les canaux de passage (28) présentent un diamètre de canal de perforation d'au moins 1 mm, notamment d'au moins 2 mm ou d'au moins 5 mm, et / ou de pas plus de 50 mm, notamment de pas plus de 20 mm ou de pas plus de 10 mm.

16. Soupape de levée (100) selon l'une quelconque des revendications 11 à 15, **caractérisée en ce que** la paroi perforée (21) s'écoule sur une extension périphérique d'au moins 90 °, notamment d'au moins 135 °, et / ou de pas plus de 270 °, notamment de pas plus de 225 ° autour d'un axe médian (M) du corps de douille.

17. Soupape de levée (100) destinée à une installation de procédé, telle qu'une installation chimique, notamment une installation pétrochimique, une centrale électrique, une brasserie ou similaires, dotée d'un corps de soupape (111), qui comprend un canal d'admission (101), un canal d'évacuation (103), une section de raccord (105) dotée d'un orifice de passage (150) et une zone de collet (107),
**caractérisée par** un siège de soupape (10, 20) selon l'une quelconque des revendications 1 à 10, placé au moins partiellement dans l'orifice de passage (150) de la section de raccord (105).

18. Soupape de levée (100) selon l'une quelconque des revendications 1 à 17, **caractérisée par** un organe (121) de soupape de levée coopérant avec le siège de soupape (10, 20), qui est déplaçable dans la direction axiale (A) par rapport au siège de soupape (10, 20) et qui comprend une surface de fermeture (113) conçue notamment sous la forme d'une surface enveloppante d'un cône tronqué, destinée à la coopération assurant l'étanchéité avec la surface de butée (13, 23) du siège de soupape (10, 20).

19. Soupape de levée (100) selon l'une quelconque des revendications 1 à 18, **caractérisée en ce que** la soupape de levée (100) définit un premier espace de travail (104) pour le fluide de procédé, qui s'étend de l'orifice de passage (150) vers le canal d'évacuation (103) et un deuxième espace de travail (102) pour le fluide de procédé, qui s'étend de l'orifice de passage (150) vers le canal d'admission (101), la surface de butée (13, 23) étant placée dans le premier espace de travail (104) et les plusieurs tourillons (11) ou la paroi perforée (21) étant placé(es) dans le deuxième espace de travail (102).

20. Soupape de levée selon la revendication 19, **caractérisée en ce que** la hauteur de tourillon (h₁₁) des tourillons (11) ou la hauteur de paroi de la paroi perforée (21) saillit d'au moins 1/3, notamment d'au moins 2/3 hors de la section de raccord dans le deuxième espace de travail (102) et / ou dans le canal d'admission (101).
